# EUROPÄISCHE PATENTANMELDUNG

(11) **EP 4 749 846 A1**
(43) Veröffentlichungstag der Anmeldung: **27.05.2026**
(21) Anmeldenummer: 25217771.2
(22) Anmeldetag: 21.11.2025
(51) Int. Cl.: H02B 1/21, H02B 1/06

(54) **ANLAGE ZUR STROMVERTEILUNG**

(30) Priorität: 21.11.2024 DE 102024134312
(71) Anmelder: bopla Gehäuse Systeme GmbH, 32257 Bünde (DE); E.ON Grid Solutions GmbH, 20537 Hamburg (DE)
(72) Erfinder: DRÖGEMÜLLER, Malte, 20255 Hamburg (DE); SCHRÖDER, Thomas, 22177 Hamburg (DE); HILBERS, David, 19071 Dalberg (DE); RANSIEK, Holger, 32257 Bünde (DE)
(74) Vertreter: Keller Schneider Patentanwaltsgesellschaft mbH

(57) **Zusammenfassung**

Die vorliegende Erfindung bezieht sich auf eine Anlage (2) zur Verteilung elektrischer Energie mit mehreren Stromverteilerschienen (4), auf die ein oder mehrere Gehäuse (6) aufgesetzt sind.

Um die Montage eines Gehäuses (6) in einer Anlage (2) zu vereinfachen, wird vorgeschlagen, dass auf zumindest eine Stromverteilerschiene (4) ein Montageelement (8) aufgesetzt ist und zumindest ein Gehäuse (6) über eine erste Paarung (10) von zusammenwirkenden Befestigungselementen (14) hängend und über eine zweite Paarung (12) von als Clips-, Klemm-, Schnapp-, Riegel- oder Rastverbindung zusammenwirkenden Befestigungselementen (14) mit dem Montageelement (8) verbunden ist.

## Beschreibung

Die vorliegende Erfindung bezieht sich auf eine Anlage zur Verteilung elektrischer Energie nach dem Oberbegriff des Anspruchs 1.

In Anlagen zur Stromverteilung, wie sie beispielsweise in Transformatorenstationen eingesetzt werden, sind Stromverteilerschienen verwendet, von denen mehrere in einer gemeinsamen vertikalen Ebene und in horizontaler Richtung ausgerichtet übereinander mit Abständen zueinander an einer Wand angeordnet sind. Um auf die Stromschienen Gehäuse zu montieren, in die elektrische und/oder elektronische Komponenten eingebaut sind, werden in einem ersten Arbeitsschritt ein oder mehrere Träger an den Stromverteilerschienen oder Gehäusen festgeschraubt. In einem zweiten Arbeitsschritt werden dann die Gehäuse auf die Stromschienen geschraubt. Nach dem zweiten Arbeitsschritt müssen dann die Gehäuse in einem dritten Arbeitsschritt mit einem Deckel geschlossen und verplombt werden. Ein Beispiel für eine solche Anlage findet sich in der Schrift DE 10 2009 045 121 A1.

Die herkömmliche Methode zur Erstellung einer Anlage zur Stromverteilung ist sehr arbeitsaufwändig. Sie erfordert eine mindestens zweimalige Verschraubung von Komponenten. Dabei hat sich die Verschraubung des Gehäuses mit den Stromverteilerschienen als besonders mühsam herausgestellt, weil das Gehäuse wegen eventueller bereits eingebauter elektrischer Komponenten schwer zu heben und während der Verschraubung zu halten sein kann. Es muss aber gleichwohl so lange gehalten werden, bis das Gehäuse an den dahinter befindlichen Schienen festgeschraubt ist. Die Verschraubung erfolgt dabei mit Schrauben, die vom Innenraum des Gehäuses her durch die Rückwand des Gehäuses nach außen geführt sind und in Gewinde eingeschraubt werden müssen, die sich hinter der Rückwand im oder am Träger befinden. Die Gewindelöcher sind dadurch für die Montageperson nur schlecht sichtbar, was die Montage erschwert.

Da es bei der Montage des Schrankes erforderlich ist, in den Innenraum des Gehäuses hineinreichen zu können, ist es nicht möglich, das Gehäuse mit komplett eingebauten elektrischen und/oder elektronischen Komponenten und einem bereits fertig montierten Deckel an der Baustelle anzuliefern. Der Deckel kann vielmehr erst auf das Gehäuse aufgesetzt werden, nachdem das Gehäuse an dem Träger befestigt worden ist. Eine Verplombung des Gehäuses ist deshalb auch erst nach der Montage des Deckels möglich.

Es ist die Aufgabe der vorliegenden Erfindung, die Montage des Gehäuses zu vereinfachen.

Die Aufgabe wird für eine gattungsgemäße Anlage gelöst, indem auf zumindest eine Stromverteilerschiene ein Montageelement aufgesetzt ist und zumindest ein Gehäuse über eine erste Paarung von zusammenwirkenden Befestigungselementen hängend und über eine zweite Paarung von als Clips-, Klemm-, Schnapp-, Riegel- oder Rastverbindung zusammenwirkenden Befestigungselementen mit dem Montageelement verbunden ist.

Das Montageelement kann als eine Profilleiste oder als Rahmen ausgeführt sein. Das Montageelement kann aus einem Kunststoff hergestellt sein. Das Montageelement ist fest mit der zumindest einen oder den mehreren Stromverteilerschienen verbunden, beispielsweise über eine Verschraubung. Für den Einbau eines Gehäuses in eine Anlage können mehrere Montageelemente verwendet werden, beispielsweise zwei Montageelemente, die in einem Abstand zueinander in einer parallelen Ausrichtung angeordnet sind. Da ein Montageelement leicht und kompakt ist, bereitet dessen Montage an der oder den Stromverteilerschienen keine großen Schwierigkeiten.

Mit dem Montageelement ist zumindest ein Gehäuse über eine besondere Befestigungstechnik verbunden. Die Befestigung erfolgt über eine erste Paarung von zusammenwirkenden Befestigungselementen hängend und über eine zweite Paarung von als Clips-, Klemm-, Schnapp-, Riegel- oder Rastverbindung zusammenwirkenden Befestigungselementen.

Bei der ersten Paarung von zusammenwirkenden Befestigungselementen sind diese so ausgestaltet, dass ein gehäuseseitiges Befestigungselement auf einem montageelementseitigen Befestigungselement über passend zueinander geformte und räumlich zueinander passend angeordnete Kontaktflächen aufliegt. Das oder die gehäuseseitigen Befestigungselemente werden zumindest teilweise über das Gewicht des Gehäuses, das über das gehäuseseitige Befestigungselement auf die Kontaktflächen des montageelementseitigen Befestigungselements einwirkt, in ihrer Einbaulage reibschlüssig aufeinander gehalten. Das montageelementseitige Befestigungselement ist dabei fest mit dem Montageelement und das gehäuseseitige Befestigungselement ist fest mit dem Gehäuse verbunden.

Die zur ersten Paarung von zusammenwirkenden Befestigungselementen zählenden Bauteile können zudem von ihrer Form her so gestaltet sein, dass sie zusätzlich auch so miteinander verbunden sind, dass die Befestigungselemente eine Trennung des Gehäuses vom Montageelement in zumindest einer Dimension formschlüssig sperren. So können die Befestigungselemente über ihre Form beispielsweise ein Abziehen des Gehäuses vom Montageelement in eine horizontale Richtung sperren. Die Befestigungselemente können über ihre Form auch eine Querverschiebung des Gehäuses in Erstreckungsrichtung der Stromverteilerschienen sperren. Die Befestigungselemente der ersten Paarung können allerdings so ausgebildet sein, dass sie ein Abheben des Gehäuses vom Montageelement zulassen, wobei die Abhebebewegung zunächst in einer zumindest annähernden Richtung nach oben und erst danach in einer zumindest annähernden horizontalen Richtung erfolgt.

Die zweite Paarung von zusammenwirkenden Befestigungselementen ist als eine Clips-, Klemm-, Schnapp-, Riegel- oder Rastverbindung ausgebildet. Durch die zweite Paarung von zusammenwirkenden Befestigungselementen werden das Gehäuse und das Montageelement in einer räumlichen Lage zueinander gehalten. Auch bei der zweiten Paarung von zusammenwirkenden Befestigungselementen ist eines fest mit dem Montageelement und das andere fest mit dem Gehäuse verbunden. Die Befestigungselemente der zweiten Paarung sind von ihrer Form her so gestaltet, dass sie in ihrer verbindenden Stellung durch zueinander kongruent geformte Bauteile die Beweglichkeit des Gehäuses relativ zum Montageelement form- und/oder kraftschlüssig blockieren. Diese Blockierung kann bei Bedarf allerdings aufgehoben werden, beispielsweise durch manuell bewegliche Bauteile an einem oder beiden der Befestigungselemente, wodurch das Gehäuse auch leicht wieder von dem Montageelement getrennt werden kann. Die Clips-, Klemm-, Schnapp-, Riegel- oder Rastverbindung kann insbesondere so ausgestaltet sein, dass sie werkzeuglos hergestellt wird und auch werkzeuglos wieder aufhebbar ist.

Anstelle einer doppelten Verschraubung - des Trägers mit den Stromverteilerschienen und des Gehäuses mit dem Träger - kann mit der hier vorgeschlagenen Befestigungstechnik zumindest auf eine der beiden Verschraubungen bei der Montage des Gehäuses verzichtet werden. Eine Verbindung des Gehäuses mit dem Montageelement kann mit den ersten und zweiten Paarungen von zusammenwirkenden Befestigungselementen werkzeuglos hergestellt werden, indem das Gehäuse in einem ersten Montageschritt am Montageelement aufgehängt und danach in einem zweiten Montageschritt mit einer Aufsetzbewegung des noch frei beweglichen Endes des Gehäuses mit dem Montageelement über die Clips-, Klemm-, Schnapp-, Riegel- oder Rastverbindung verclipst, verklemmt, eingeschnappt, verriegelt oder verrastet wird. Zur Herstellung der Verbindung der Befestigungselemente der zweiten Paarung miteinander kann ein leichter Druck auf das Gehäuse im Bereich der zur zweiten Paarung gehörenden Befestigungselemente ausreichen. Eine solche Verbindung des Gehäuses mit dem Montageelement ist erheblich einfacher herstellbar als die herkömmliche Schraubverbindung des Gehäuses mit dem Träger, weil das Gehäuse nicht mehr lange fluchtend zu einem Schraubkanal gehalten werden muss und die Verbindung werkzeuglos und ohne den Einsatz von separaten Verbindungshilfsmitteln, wie beispielsweise Schrauben, herstellbar ist.

Ein weiterer Vorteil der neuen Verbindungstechnik ist darin zu sehen, dass das Gehäuse in einem geschlossenen Zustand montiert werden kann. Das Innere des Gehäuses kann also in einer Fabrik mit sämtlichen Bauteilen bestückt werden, die für dessen bestimmungsgemäßer Nutzung erforderlich sind, und das Gehäuse kann danach noch in der Fabrik mit einem Deckel versehen und verplombt werden. Ein Eingriff in das Gehäuse am Montageort der Anlage ist mit der neuen Verbindungstechnik nicht mehr erforderlich. Am Montageort ist es auch nicht mehr erforderlich, den Deckel zu montieren und das Gehäuse zu verplomben, wodurch die Montage erheblich vereinfacht und beschleunigt wird.

Mit der vorgeschlagenen Verbindungstechnik können beliebig viele Gehäuse nebeneinander oder auch untereinander in einer Anlage mit Stromverteilerschienen verbaut sein, wenn zuvor eine ausreichende Zahl von Montageelementen auf die Stromverteilerschienen aufgesetzt worden sind. Ein Hersteller kann Gehäuse mit verschiedenen Abmessungen in einem Baukasten vorhalten, sodass ein Anwender sich für seinen Anwendungsfall passende Gehäuse aus dem Baukasten für seine Anlage aussuchen kann.

Nach einer Ausgestaltung der Erfindung ist die erste Paarung von zusammenwirkenden Befestigungselementen in einer ersten Ebene oberhalb einer zweiten Ebene der zweiten Paarung von zusammenwirkenden Befestigungselementen angeordnet. Die Montage des Gehäuses ist vereinfacht, wenn das Gehäuse mit seinem oberen Teil zunächst am Montageelement eingehängt wird und das Gehäuse erst danach über die zweite Paarung von zusammenwirkenden Befestigungselementen, die sich in einem unteren Bereich des Gehäuses befinden, mit dem Montageelement verbunden wird. Durch die in unterschiedlichen Höhen angeordneten Befestigungselemente ergibt sich eine gute Befestigung des Gehäuses am Montageelement, das Gehäuse ist über seine Bauhöhe hinweg an verschiedenen Stellen am Montageelement gehalten.

Nach einer Ausgestaltung der Erfindung befinden sich die beiden Paarungen von zusammenwirkenden Befestigungselementen in einer gemeinsamen vertikalen Ebene. Durch diese Anordnung kann die Rückwand des Gehäuses plan oder nahezu plan ausgestaltet sein. Der verfügbare Bauraum in der Anlage wird dadurch optimal ausgenutzt.

Nach einer Ausgestaltung der Erfindung ist zwischen den Stromverteilerschienen und dem Montageelement einen Fingerschutz montiert. Der Fingerschutz kann als eine flache Platte ausgestaltet sein, die die Stromverteilerschienen abdeckt und verhindern soll, dass eine Wartungsperson, die Wartungs- oder Reparaturarbeiten an der Anlage ausführt, versehentlich die Stromverteilerschienen berührt.

In einer Ausgestaltung kann der Fingerschutz deshalb Abmessungen haben, die so weit über die Stromverteilerschienen überstehen, dass es nicht möglich ist, die Stromverteilerschienen von den Außenrändern des Fingerschutzes her mit den Fingern zu berühren, ohne dafür den Fingerschutz demontieren zu müssen. Im Fingerschutz können Langlöcher ausgebildet sein, über die der Fingerschutz mit den Stromverteilerschienen und dem Montageelement verschraubt werden kann. Über die Langlöcher ist es gleichgültig, in welchem Abstand die Stromverteilerschienen zueinander angeordnet sind, weil der Fingerschutz in jedem Fall mit den Stromverteilerschienen verschraubt werden kann. Der Fingerschutz kann weitere Ausnehmungen aufweisen, um einen Kontakt von elektrischen oder elektronischen Komponenten, die in dem Gehäuse angeordnet sind, mit einer oder mehreren Stromverteilerschienen zu ermöglichen.

In einer weiteren Ausführungsform ist der Fingerschutz vorzugsweise von einer Montageposition in eine Schutzposition überführbar ausgebildet. Dazu sind in dem Fingerschutz Langlöcher ausgebildet, entlang welcher der Fingerschutz von einer Montageposition in eine Schutzposition verschiebbar ausgeführt ist.

In der Schutzposition verhindert der Fingerschutz einen Kontakt der Stromverteilerschienen. Ein solcher Kontakt kann hierbei insbesondere durch einen Spalt zwischen der Oberseite des Gehäuses und dem Anlagengehäuse oder einer in vertikaler Richtung oberhalb des Gehäuses angeordneten Komponente erfolgen. In der Montageposition kann dieser Spalt zumindest bereichsweise freiliegen. Mit anderen Worten, zumindest ein Bereich des Spaltes kann in der Montageposition des Fingerschutzes nicht von dem Fingerschutz überdeckt sein.

Insbesondere kann dieser Spalt von Anlage zu Anlage und in Abhängigkeit des eingesetzten Gehäuses unterschiedlich groß ausgebildet sein. Um die Größenänderung des Spalts kompensieren zu können, ist der Fingerschutz vorzugsweise entlang der Langlöcher verschieblich ausgebildet. So kann der Fingerschutz vorteilhafterweise flexibel an den verfügbaren Einbauraum und die darin angebrachten Gehäuse angepasst werden. Mit anderen Worten, der Fingerschutz eignet sich insbesondere zum Einsatz in unterschiedlichen Anlagen mit variierenden Abmessungen. Es muss also nicht auf die Auswahl eines passenden, einer jeweiligen Anlage zugeordneten Fingerschutzes geachtet werden.

Dabei kann der Fingerschutz mittels eines in eine nicht-durchgängig ausgebildete Ausnehmung eingreifendes Werkzeug von der Montageposition in die Schutzposition überführt und während eines Befestigungsvorgangs des Montageelements an zumindest einer Stromverteilerschiene gehalten werden. Anschließend kann das Werkzeug gelöst werden. Der Fingerschutz wird dann durch das Montageelement kraftschlüssig in der Schutzposition gehalten.

Auch hier können auf einer oder beiden Seiten der Langlöcher zusätzliche Ausnehmungen angeordnet sein. Diese sind dazu vorgesehen, Platz für weitere Elemente, wie beispielsweise Befestigungselemente der Stromverteilerschienen an dem Anlagengehäuse, zu schaffen. Insbesondere ist das Gehäuse und die darin eingebauten elektrischen und/oder elektronischen Komponenten elektrisch von den Stromverteilerschienen isoliert.

Nach einer Ausgestaltung der Erfindung sind das Montageelement und das Gehäuse aus einem Kunststoff hergestellt. Ein Kunststoff als Werkstoff ist elektrisch nicht leitend, die in das Gehäuse eingebauten elektrischen und elektronischen Bauteile sind dadurch elektrisch isoliert und besser gegen Kriechströme und/oder Spannungsüberschläge geschützt.

Nach einer Ausgestaltung der Erfindung weichen die Montageebenen, über die die ersten und zweiten Paarungen von zusammenwirkenden Befestigungselementen miteinander in Eingriff sind, voneinander ab. Aus der räumlichen Lage der verschiedenen Montageebenen ergibt sich eine zwangsläufige Abfolge der einzelnen Montage- und Demontageschritte.

Nach einer Ausgestaltung der Erfindung ist die Montageebene, in der die erste Paarung von zusammenwirkenden Befestigungselementen miteinander in Eingriff steht, in einer zumindest überwiegend vertikalen räumlichen Lage und die Montageebene, in der die zweite Paarung von zusammenwirkenden Befestigungselementen miteinander in Eingriff steht, in einer zumindest annähernd horizontalen räumlichen Lage ausgerichtet. Bei einer hängenden Verbindung des Gehäuses mit dem Montageelement werden die zusammenwirkenden Befestigungselemente der ersten Paarung über eine Einhängebewegung in eine zumindest überwiegend vertikale Richtung miteinander in Eingriff gebracht. Die Richtung der Einhängebewegung entspricht der Montageebene der ersten Paarung. Bei einer späteren Demontage wird das Gehäuse vom Montageelement in einer zumindest überwiegend vertikalen Richtung abgehoben. Die Befestigungselemente der zweiten Paarung werden in einer zumindest annähernd horizontalen Richtung aufeinander zu bewegt, um diese Befestigungselemente miteinander in Eingriff zu bringen. Die zumindest annähernd horizontale Richtung, in der die Befestigungselemente der zweiten Paarung bei Ihrer Verbindung miteinander aufeinander zu bewegt werden, entspricht der Montageebene der zweiten Paarung. Die Demontage dieser Befestigung erfolgt dann durch eine Abziehbewegung des Gehäuses vom Montageelement in eine zumindest annähernd horizontale Richtung. Je nachdem, welche Befestigungselemente für die zweite Paarung verwendet sind, kann es erforderlich sein, eines der Befestigungselemente zu entsperren, beispielsweise, in dem es soweit eingedrückt wird, dass die von ihm bewirkte Sperre aufgehoben wird. Indem die Montageebenen der ersten und zweiten Paarungen von Befestigungselementen voneinander abweichen, blockieren diese eine unerwünschte Montage- oder Demontageabfolge. Im beschriebenen Ausführungsbeispiel kann die Verbindung der zweiten Paarung von Befestigungselementen erst hergestellt werden, nachdem die Befestigungselemente der ersten Paarung miteinander in Eingriff gebracht worden sind, also das Gehäuse am Montageelement aufgehängt worden ist. Umgekehrt kann das Gehäuse zur Demontage vom Montageelement erst abgehoben werden, nachdem die Verbindung zwischen den Befestigungselementen der zweiten Paarung gelöst worden ist. Durch diese Bewegungsabfolge wird sichergestellt, dass das Gehäuse nicht allzu leicht und möglicherweise ungewollt vom Montageelement demontiert werden kann.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, soweit dem keine technisch zwingenden Hindernisse entgegenstehen.

Die Erfindung wird nun anhand eines bevorzugten Ausführungsbeispiels sowie unter Bezugnahme auf die beigefügten Zeichnungen näher erläutert.

Es zeigen:
Fig. 1: eine schematische Seitenansicht auf eine Anlage vor der Montage des Gehäuses, und
Fig. 2: eine schematische Seitenansicht auf die in Fig. 1 gezeigte Anlage nach der Montage des Gehäuses.

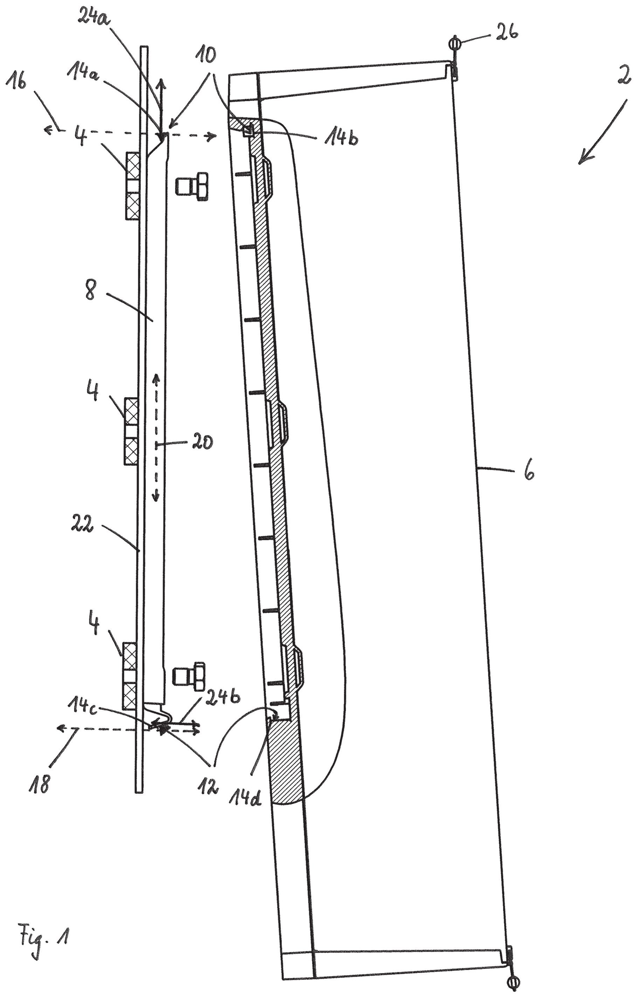

In Fig. 1 ist eine schematische Seitenansicht auf eine Anlage 2 gezeigt. Dargestellt sind drei Stromverteilerschienen 4, auf die einen Gehäuse 6 aufgesetzt werden soll. Die Stromverteilerschienen 4 sind in einer Seitenansicht gezeigt, sie sind in einem Abstand zueinander und parallel zueinander verlaufend angeordnet. Auf zumindest eine Stromverteilerschiene 4 ist ein Montageelement 8 aufgesetzt. Das Montageelement 8 kann beispielsweise aus einer oder mehreren Profilleisten bestehen und mit den eingezeichneten Schrauben mit den Stromverteilerschienen 4 verschraubt sein. Das Montageelement 8 und das Gehäuse 6 können aus einem Kunststoff hergestellt sein.

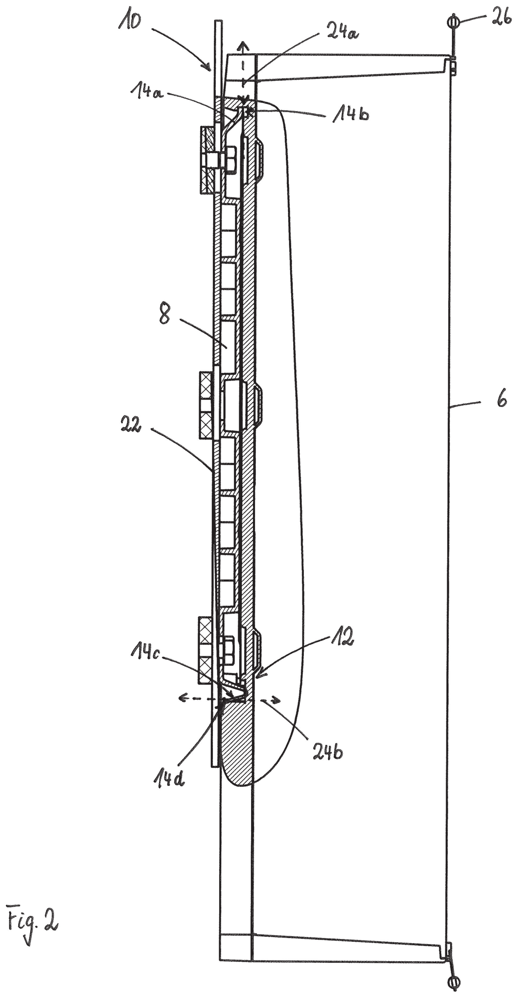

Das Gehäuse 6 soll mit dem Montageelement 8 über eine erste Paarung 10 von zusammenwirkenden Befestigungselementen 14 hängend verbunden werden. Im gezeigten Ausführungsbeispiel ist das montageelementseitige Befestigungselement 14a ein Haken, in den eine im Gehäuse 6 ausgebildete Aufnahmenut eingepackt werden kann, die das gehäuseseitige Befestigungselement 14 b bildet. Als zweite Paarung 12 von zusammenwirkenden Befestigungselementen 14 ist im Ausführungsbeispiel eine Rastverbindung gezeigt, die als montageelementseitiges Befestigungselement 14c eine gefederte Lasche und als gehäuseseitiges Befestigungselement 14 d eine Rastnase aufweist. Die gehäuseseitigen Befestigungselemente 14 b, 14 d sind in den Fig. 1 und 2 gut sichtbar, weil das Gehäuse 6 in diesem Bereich in einer Teilschnittansicht gezeigt ist. Zwischen den Stromverteilerschienen 4 und dem Montageelement 8 ist ein Fingerschutz 22 montiert, der von der Verschraubung des Montageelements 8 mit den Stromverteilerschienen 4 in seiner Einbaulage gehalten ist.

Die erste Paarung 10 von zusammenwirkenden Befestigungselementen 14 ist in einer ersten Ebene 16 und die zweite Paarung 12 von zusammenwirkenden Befestigungselementen 14 ist in einer zweiten Ebene 18 angeordnet. Die erste Ebene 16 befindet sich in einer Höhe oberhalb der zweiten Ebene 18. Die beiden Paarungen 10, 12 von zusammenwirkenden Befestigungselementen 14 befinden sich in einer gemeinsamen vertikalen Ebene 20.

In Fig. 2 ist eine schematische Seitenansicht auf die in Fig. 1 gezeigte Anlage 2 nach der Montage des Gehäuses 6 gezeigt. Die Montageebenen 24a, 24b, über die die ersten und zweiten Paarungen 10, 12 von zusammenwirkenden Befestigungselementen 14 miteinander in Eingriff sind, weichen voneinander ab. Die Montageebene 24a, in der die erste Paarung 10 von zusammenwirkenden Befestigungselementen 14 miteinander in Eingriff steht, ist in einer vertikalen räumlichen Lage ausgerichtet und die Montageebene 24b, in der die zweite Paarung 12 von zusammenwirkenden Befestigungselementen 14 miteinander in Eingriff steht, ist in einer zumindest annähernd horizontalen räumlichen Lage ausgerichtet.

Für die Montage des Gehäuses 6 in der Anlage 2 und die Demontage des Gehäuses 6 aus der Anlage 2 ist es nicht erforderlich, die Verplombung 26 zu öffnen, um in das Innere des Gehäuses 6 zu gelangen. Die Montage und Demontage kann mit einem verschlossenen Gehäuse 6 ausgeführt werden.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugszeichenliste

- 2: Anlage
- 4: Stromverteilerschiene
- 6: Gehäuse
- 8: Montageelement
- 10: erste Paarung
- 12: zweite Paarung
- 14: Befestigungselement
- 16: erste Ebene
- 18: zweite Ebene
- 20: vertikale Ebene
- 22: Fingerschutz
- 24: Montageebene
- 26: Verplombung

## Patentansprüche

1. Anlage (2) zur Verteilung elektrischer Energie mit mehreren Stromverteilerschienen (4), auf die ein oder mehrere Gehäuse (6) aufgesetzt sind, **dadurch gekennzeichnet, dass** auf zumindest eine Stromverteilerschiene (4) ein Montageelement (8) aufgesetzt ist und zumindest ein Gehäuse (6) über eine erste Paarung (10) von zusammenwirkenden Befestigungselementen (14) hängend und über eine zweite Paarung (12) von als Clips-, Klemm-, Schnapp-, Riegel- oder Rastverbindung zusammenwirkenden Befestigungselementen (14) mit dem Montageelement (8) verbunden ist.

2. Anlage (2) nach Anspruch 1, **dadurch gekennzeichnet, dass** die erste Paarung (10) von zusammenwirkenden Befestigungselementen (14) in einer ersten Ebene (16) oberhalb einer zweiten Ebene (18) der zweiten Paarung (12) von zusammenwirkenden Befestigungselementen (14) angeordnet ist.

3. Anlage (2) nach Anspruch 1 oder 2, **dadurch gekennzeichnet, dass** sich die beiden Paarungen (10, 12) von zusammenwirkenden Befestigungselementen (14) in einer gemeinsamen vertikalen Ebene (20) befinden.

4. Anlage (2) nach einem der vorhergehenden Ansprüche, **dadurch gekennzeichnet, dass** zwischen den Stromverteilerschienen (4) und dem Montageelement (8) einen Fingerschutz (22) montiert ist.

5. Anlage (2) nach einem der vorhergehenden Ansprüche, **dadurch gekennzeichnet, dass** das Montageelement (8) und das Gehäuse (6) aus einem Kunststoff hergestellt sind.

6. Anlage (2) nach einem der vorhergehenden Ansprüche, **dadurch gekennzeichnet, dass** die Montageebenen (24a, 24b), über die die ersten und zweiten Paarungen (10, 12) von zusammenwirkenden Befestigungselementen (14) miteinander in Eingriff sind, voneinander abweichen.

7. Anlage (2) nach Anspruch 6, **dadurch gekennzeichnet, dass** die Montageebene (24a), in der die erste Paarung (10) von zusammenwirkenden Befestigungselementen (14) miteinander in Eingriff steht, in einer zumindest überwiegend vertikalen räumlichen Lage ausgerichtet und die Montageebene (24b), in der die zweite Paarung (12) von zusammenwirkenden Befestigungselementen (14) miteinander in Eingriff steht, in einer zumindest annähernd horizontalen räumlichen Lage ausgerichtet ist.
